Europäisches Patentamt

European Patent Office

Office européen des brevets

(11) Publication number: **0 238 821**
**A2**

# EUROPEAN PATENT APPLICATION

(21) Application number: 87101726.5

(22) Date of filing: 09.02.87

(51) Int. Cl.⁴: **B 05 B 15/04**

(30) Priority: **19.02.86 IT 4570586**

(43) Date of publication of application: **30.09.87**
**Bulletin 87/40**

(84) Designated Contracting States: **AT BE DE ES FR GB GR NL SE**

(71) Applicant: **Vidali, Oriana, Via Ponte di Terra, 14, I-31040 Chiarano Treviso (IT)**
Applicant: **Vidali, Patrizia, Via Ponte di Terra, 14, I-31040 Chiarano Treviso (IT)**

(72) Inventor: **Vidali, Oriana, Via Ponte di Terra, 14, I-31040 Chiarano Treviso (IT)**
Inventor: **Vidali, Patrizia, Via Ponte di Terra, 14, I-31040 Chiarano Treviso (IT)**

(54) **Paint recovery plant.**

(57)  Paint recovery plant which may be utilized in association with conventional furniture painting plants, comprising spraying devices (4) connected by means of pipes (5) and one or more circulation pumps (7) to reservoirs containing the paints, as well as comprising a lower tank (10).

Recovery plant comprising a separated reservoir (11) containing additional paint solvents and connected, by means of pipes (12) and one or more re-circulation pumps (13), to a tray (14) which is disposed in an inclined position on the respective painting plant, in such a manner as to permit the circulation of the solvents on the surface of the same tray (14) and the contact of the solvents with the paint which is wasted, during the painting operation, so allowing such a paint to be recovered.

0238821

## PAINT RECOVERY PLANT

The present invention relates to a paint recovery plant of a simple kind, which may be utilized in association with painting plants for furniture, wood elements or the like, in order to re-utilize advantageously the paint which is wasted during the painting operation. As it is known, the present painting plants are substantially constituted by conventional spraying devices (i.e. spraying guns,spraying nozzles,which are manually or automatically operating, etc.), wherein such devices may be positioned in different positions with respect to the pieces to be treated, and in addition they are connected, by means of pipings and already known circulating pumps, to a series of separated reservoirs, in which the different component substances of the paints, which are utilized, are preventively introduced, mixed and diluted in an adequate manner.

In addition, such plants are generally provided with in different ways shaped supports, for supporting the pieces to be treated, as well as with one or more tanks for collecting and conveying the paint, which is wasted during the painting operation, said tanks being situated below and adequately spaced with respect to the spraying devices and the pieces to be treated, so permitting the most possible amount of wasted paint to be collected therein.

Advantageously, such tanks are provided with one or more conventional aspirators, which are disposed in correspondence ot the bottom side of the same tanks, in order to make easier the atomized paint to be conveyed onto profiled collecting sheets. These sheets are also disposed on the bottom side of the considered tanks.

This kind of plants are still permitting to obtain pieces, which are painted in a rapid and satisfactory manner, but they do not allow the wasted paint, which is collected within the tanks as described, either effectually or partially to be recovered.

This drawback is attributable mainly to the fact that the paint in the atomized state, which is coming out from the spraying devices of each painting plant, tends to catalyze in a time shorter than that one normally re quired for the catalysis of the paint in the not-atomized state. This fact is probably due to the partial separation of the catalyst substances from the paint component substances during the spraying operation of the same paint. Moreover, since the paint catalysis occurs in any case in a not reversible manner (that is the single components of the paint cannot be separated and mixed again, in order to obtain further paint), it follows that the paint wasted during the painting operation in the described plants, cannot be recovered and it is practically unemployed, accumulating as layers onto the respective profiled sheets in the tanks of the plants referred to.

In practice, considerable percentages of wasted paints are obtained in the present painting plants, and this fact requires a paint quantity to be used, which is remarkably greater than the strictly necessary quantity. The process is economically expensive, due to the the considerable costs of not utilized paint.

In addition, the painting plants referred to, and parti cularly the high production capacity plants (like, for instance the plants automatically operated wtih robots) require frequent maintenance operations, due to the rapid accumulation of the wasted paint onto the sheets of the relevant tanks, as well as the consequent removal of the same material.

A further drawback of these plants consists of removing and eliminating such wasted paints, which are not biodegradable and therefore they make considerable important ecologycal questions arise.

Therefore, it would be desirable (and this is the scope of the present invention) to overcome the above described drawbacks, by providing a painting plant which is able to recover, in an effective and simple way, an amount of wasted paint as great as possible, allowing the same to be re-utilized for the subsequent painting operations.

This paint recovery plant is substantially based on the principle of preventing the paint (which is wasted during the painting operations) to be catalyzed within a rather short time, like it occurs at present, by adequately slowing down the catalysis process of the paint in the manner hereinafter described, so that the paint components can be mixed again with further components of paint of the same kind and diluted therein, so providing a new paint mixture which is adapted for subsequent utilizations.

These and other scopes are obtained, according to the invention, by means of a paint recovery plant which may be utilized in association with painting plants for furniture and relative wood component elements or the like, comprising one or more conventional paint spraying devices, manually or automatically operating, said devices being provided for spraying the pieces  to be treated on their  surfaces, which pieces are disposed on suitable supports moved towards said pianting plants, said spraying devices being connected by means of pipings and at least one circulating pump of per se known kind to be at least a reservoir, containing the different component substances of the respectively employed paint, which are diluted with conventional solvents. The paint recovery plant according to the present invention is characterized in that it comprises at least a separated reservoir able to contain further solvents of the paint and connected by means of pipings and re-circulating means to conveying means, disposed in correspondence of the painting zone of the painting plants, in a position situated directly below the pieces to be treated and said spraying devices, said re-circulating means being able to determine a repeated circulation of said further solvents from and towards the said separeted reservoir, through said conveying means, and said conveying means being so shaped as to permit the paint which is wasted during the painting operation to be collected therein and mixed with said further solvents.

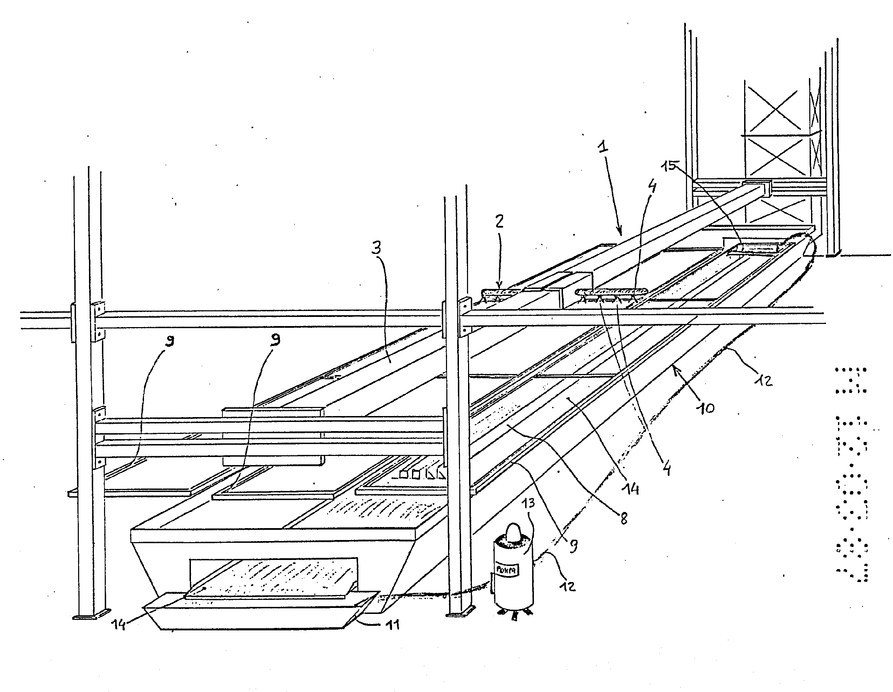

The features and the advantages of the invention will be apparent with reference to the following specification, by way of not a limiting example only, and to the sole enclosed drawing, showing a perspective view of the paint recovery plant according to the invention, in association with a conventional painting plant. Referring to the drawing, a painting plant is shown, for furniture and relevant wood component elements thereof or the like, which plant is constituted by a conventional painting robot 1, fully automatically operating, said robot being provided with a spraying tube 2, alternatively slidable within a support structure 3 of the painting plant referred to and having spraying nozzles 4 positionable in different manners, said spraying tube being connected by suitable pipings (embodied within the structure 3 and not shown) to one or more reservoirs (not shown), able to hold the different component substances of the respectively utilized piant, which substances are diluted in an adequate ratio into conventional solvents.

One or more conventional circulating pumps (also not shown) are additionally connected to the described pipings, in order to determine the suction of the substances contained within the reservoir and the spraying of the same, through the spraying tube 2 and the spraying nozzles 4, onto the surface of the pieces to be treated (in this case formed by furniture elements 8),which are put on a suitable support 9 (the drawing shows three identical supports) moved towards the support structure 3 of the painting plant referred to.

Of course, the described painting plant may also be realized in a different manner, for instance the spraying nozzles 4 may be replaced by conventional spraying guns (not shown), automatically operating, which are combined with the painting robot 1, or manually operating, without departing from the protection field of the present inventive idea.

Moreover, this painting plant is advantageously provided with a lower tank 10, generally with large sizes,

- 6 -

0238821

which is disposed below the paint spraying zone and in correspondence thereof, and which has one or more conventional aspirators (not shown), to make easier the conveyance of the paint wasted during the spraying operation towards the tank 10, said tank being also so shaped as to prevent in as wide manner as possible,the paint from being lost towards the outside of the plant. The recovery plant according to the invention is so conceived as to allow the paint wasted during the painting operation to be effectively recovered and re-utili zed, which plant comprises substantially at least a separated reservoir 11, which is able to contain further solvents of the paint and which is connected by pipings 12, and which comprises at least a conventional re-circulating pump 13 or the like to a tray 14, suitable dimensioned and able to allow these solvents to be conveyed in the manners as described thereinafter, said tray being supported by the tank 10 in correspondence of the painting zone, and in a position situated directly below the support 9, the pieces 8 to be treated and the spraying nozzles 4 of the painting robot 1. Besides, the tray 14 is provided at one end with a transversal gutter 15, adequately hollowed and connected to the delivery side of the pump or pumps 13 and also supported by the considered tank in a slightly inclined position, so that the gutter 15 results to be situated at a higher level than that one of the other end of the tray 14.

Particularly, this latter end of the tray referred to is opened and disposed over the reservoir 11, which in turn is mechanically connected both to the same tray and to the tank of the painting plant.

Operation of the re-circulating pump 13 of the so con stituted recovery plant causes the solvents contained into the reservoir 11 to be sucked therefrom and to be circulated towards the gutter 15 of the tray 14, where these solvents overflow and are conveyed on the outer surface of said tray, by forming a thin film thereon and afterwards returning by gravity into the reservoir 11 again.

The so obtained repeated circulation of the solvents in the recovery plant is then separated with respect to the circulation of the paints in the same painting plant. In such a way, the paint wasted during the painting operation is continuously collected by the tray 14 and mixed with the solvents being circulating through the same tray, without possibility of falling down on the bottom side of the tank 10 of the painting plant referred to, as previously.

It follows that the components of the wasted paint are again diluted by such solvents before the end of the catalysis process of the same components.

Thus, this fact allows the catalysis process of the utilized paint to be remarkably lowered, so permitting the same paint to be re-utilized during the further painting operations.

Afterwards, the so recovered and diluted paint is drawn from the reservoir 11 of the present recovery plant, then it is mixed with additional paint, eventually diluted with additional solvents and introduced into the reservoir of the painting plant.

Obviously, according to the invention, the same result may be obtained also by shaping and arranging in a different manner the above described components of the recovery plant, provided that this latter always determines a separated circulation or presence of solvents and a mixing of the same with the paint wasted during the painting operation.

Thus, this recovery plant allows the wasted paint to be re-utilized, with consequent considerable saving of paint utilized, minimizing the paint wastes and the ambient pollution, as well as a lower maintenance required for the considered painting plants.

**0238821**

## C L A I M S

1) Paint revovery plant, which may be utilized in association with painting plants for furniture and relative wood elements or the like, comprising one or more conventional paint spraying devices, manually or automatically operating, which devices are provided for spraying the surfaces of the pieces to be treated, which are disposed on suitable supports moved towards said painting plants, said spraying devices being connected by means of pipings and at least one circulating pump of per se known kind to at least a reservoir containing the different component substances of the respectively employed paint which are diluted with conventional solvents, characterized in that it comprises at least a separated reservoir (1) able to contain further solvents of the paint and connected by means of pipings (12) and re-circulating means (13) to conveying means (14) disposed in correspondence of the painting zone of the painting plant, in a position directly situated below the pieces (8) to be treated and said spraying devices (4), said re-circulating means (13) being able to determine a repeated circulation of said further solvents from and towards said separated reservoir (11), through said conveying means (14) and said conveying means (14) being so shaped as to permit the paint wasted during the painting operation to be collected therein and mixed with said further solvents.

2) Paint recovery plant according to Claim 1, characterized in that said re-circulating means are constituted by at least a conventional re-circulating pump (13) or the like.

3) Paint recovery plant according to Claim 1 and 2, characterized in that said conveying means comprise a tray (14), supported in an inclined position by said painting plant and provided at one end thereof with a hollowed gutter (15), connected to the delivery side of said re-circulating pump (13) and opened at its other end, which is situated at a level lower that said gutter (15) and is communicating with said separated reservoir (11).

0238821